# EUROPEAN PATENT SPECIFICATION

(11) **EP 3 650 892 B1**
(45) Date of publication and mention of the grant of the patent: **04.01.2023**
(21) Application number: 18204921.3
(22) Date of filing: 07.11.2018
(51) Int. Cl.: G01V 1/18, G10K 11/00

(54) **A SYSTEM FOR UNDERWATER SOUND MEASUREMENT**
SYSTEM ZUR UNTERWASSERSCHALLMESSUNG
SYSTÈME DE MESURE ACOUSTIQUE SOUS-MARINE

(43) Date of publication of application: 13.05.2020
(73) Proprietor: Damen 40 B.V., 4200 AA Gorinchem (NL)
(72) Inventor: Joosten, Wouter, 2512 XS Den Haag (NL); Keizer, Tjakko, 4254 EN Sleeuwijk (NL)
(74) Representative: De Vries & Metman

(56) References cited:
- JP-A- 2000 234 952
- US-A- 5 398 214
- US-A1- 2014 334 256
- US-A1- 2017 123 088
- US-A1- 2018 267 184
- Det Norske Veritas: "RULES FOR SHIPS - APPENDIX A: MEASUREMENT PROCEDURE", , 1 January 2010 (2010-01-01), pages 13-18, XP055587341, Retrieved from the Internet: URL:https://rules.dnvgl.com/docs/pdf/DNV/r ulesship/2011-07/ts624.pdf [retrieved on 2019-05-09]
- KOAY TEONG BENG ET AL: "Estimating the spatial and temporal distribution of snapping shrimp using a portable, broadband 3-dimensional acoustic array", OCEANS 2003. MTS/IEEE PROCEEDINGS. CELEBRATING THE PAST, TEAMING TOWARD THE FUTURE. SAN DIEGO, CA, SEPT. 22 - 26, 2003; [OCEANS MTS/IEEE CONFERENCE PROCEEDINGS], COLUMBIA, MD : MARINE TECHN. SOC, US, 22 September 2003 (2003-09-22), pages 2706-2713Vol.5, XP031871205, DOI: 10.1109/OCEANS.2003.178334 ISBN: 978-0-933957-30-5

## Description

The present invention relates to a system for underwater sound measurement, comprising a hydrophone which is located within an open cage having at least one face for resting on a sea bottom.

Underwater sound measurement has become relevant since it has been found that ship-radiated noise can have impact on marine life. Underwater sound measurement is also relevant for detectability or performance of acoustic sensors on (navy) ships. Underwater sounds are typically received by a hydrophone. It is known to install a hydrophone inside an open cage which is lowered onto the sea bottom by a measurement vessel. The cage is fixed to a hoisting cable which suspends from the measurement vessel or from a floater or buoy. The hydrophone signal is transmitted to the measurement vessel where a data acquisition device receives and processes the sound signal. Alternatively, the signal may be transmitted to a measurement station on shore. The organization Det Norske Veritas AS has published requirements for measurements of underwater noise radiated by ships in a document titled Rules for Classification of Ships, part 6, chapter 7, July 2018. More specifically, Appendix A of the mentioned document describes a detailed measurement procedure, for example including a requirement that the hydrophone shall be mounted in a cage or fixture able to keep the hydrophone in a stable position at a maximum height of 0.2 m above the sea bottom, whereas the cage structure shall be open, stiff and well damped. The document shows an example of a possible cage, which has a shape of a right pyramid and has a relatively heavy bottom frame to keep the cage in a desired position on the sea bottom. A disadvantage of the known system is that the relatively large and thick bars of the bottom frame may adversely affect the measured sound signal.

An object of the invention is to provide a reliable and accurate system for underwater sound measurement.

This object is achieved by the system according to the invention which is characterized in that the cage comprises a frame having a shape of a regular polyhedron and the hydrophone is located at a geometrical centre of the frame.

Due to the shape of a regular polyhedron and the location of the hydrophone the cage has similar faces at its circumference and the distance between the hydrophone and each of the faces is equal. This is advantageous since the distance from the hydrophone to the sea bottom is always the same, independent from which one of the faces rests on the sea bottom. For example, if the cage is lowered to the sea bottom its orientation may change before or after one of its faces is supported by the sea bottom due to a strong current or waves, but the height of the hydrophone above the sea bottom remains the same. Furthermore, the cage can be made of a light-weight frame since there is no preferred face of the regular polyhedron which must rest on the sea bottom. In other words, the weight of the cage must only be sufficient to stay on the sea bottom, which allows slim structural members of the frame. This minimizes signal disturbance during noise measurements, hence creating accurate measurement conditions.

Several types of regular polyhedral are conceivable, such as a cube or an octahedron, for example.

Preferably, the polyhedron is a tetrahedron, since this can be manufactured relatively easily and the frame has a small number of structural members which minimizes disturbance of the sound signal. When one of the faces rests on the sea bottom only three structural members of the frame surround the hydrophone above the face that rests on the sea bottom. Furthermore, the frame has a low centre of gravity and wide base which provides a stable condition on the sea bottom.

The hydrophone may be mounted to a support which is fixed to a corner of the frame and which protrudes in the cage. The support may have a bar shape, for example.

In a particular embodiment the frame is made of rigid bars having the same dimensions and cross-sectional shapes. In case of a frame having a shape of a tetrahedron the centre of gravity will be located at or close to the geometrical centre of the frame. This means that when the cage is fixed to a hoisting cable at one of the corners of the frame, the hoisting cable is automatically aligned with the geometrical centre of the frame such that the face opposite to the corner where the hoisting cable is fixed has a substantially horizontal orientation.

In a preferred embodiment the bars have circular cross-sections, since this creates a symmetric shape of the frame hence minimizing the influence on the sound signal due to its rotational position about a vertical axis. In case of a non-symmetrical shape a current along and through the frame may vary such that flow noise generated by the current might affect the sound signal depending on the orientation of the cage on the sea bottom.

The invention will hereafter be elucidated with reference to the schematic drawings showing an embodiment of the invention by way of example.
Fig. 1 is an illustrative view of an embodiment of a system for underwater sound measurement according to the invention.
Fig. 2 is a perspective view of a part of the system of Fig. 1 on a larger scale.

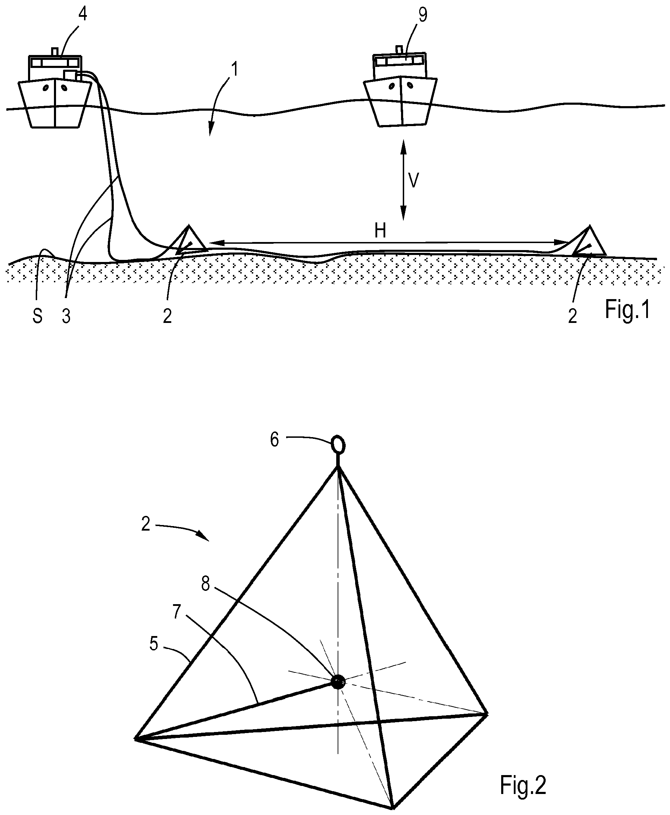

Fig. 1 shows an embodiment of a system 1 for underwater sound measurement according to the invention. In this case the system 1 is provided with two open cages 2 which are lowered by hoisting cables 3 from a measurement vessel 4 and rest on the sea bottom S. A system 1 including only a single cage 2 is conceivable, as well. Fig. 2 shows one of the cages 2 in more detail. Each cage 2 comprises a frame 5 having a shape of a regular tetrahedron. The frame 5 is made of rigid bars, for example made of stainless steel, which have the same dimensions and circular cross-sections. The lengths of the bars may be 1000 mm and their diameters may be 20 or 25 mm, for example. The cage 2 is also provided with a lifting eye 6 to which the hoisting cable 3 is fixed.

The cage 2 comprises a supporting bar 7 which is fixed to one of the four corners of the frame 5 and which is directed from the corner to a geometrical centre of the frame 5. At the end of the supporting bar 7 a hydrophone 8 is mounted such that it is located at the geometrical centre of the frame 5. Due to the shape of a tetrahedron the distance between the hydrophone 8 and each of the four faces of the frame 5 is equal. In the embodiment as shown in Fig. 2 the distance between the hydrophone and each of the four faces is 200 mm. Under operating conditions the cage 2 will rest on the sea bottom S in an orientation as shown in Fig. 2 because of the location of the lifting eye 6. Nevertheless, if the cage 2 tilts due to a strong current, for example, the sea bottom S will support another face of the frame 5, whereas the height of the hydrophone 8 above the sea bottom S remains the same. It is noted that the supporting bar 7 may also be mounted to one of the bars between opposite corners, for example at a centre of one of the bars.

Fig. 1 illustrates a ship 9 which sails past the cages 2 including the respective hydrophones 8. The noise from the ship 9 is recorded during a defined portion of its sailing path. In practice the ship 9 will sail past the hydrophones 8 in opposite directions. The forward and backward sailing track for both directions is always equal such that both sides of the ship 9 are measured along the same distance. The position of the track with respect to the hydrophones 8 can be at any predefined position as long as both tracks are the same. The horizontal distance H between the cages 2 may be 300 m, for example, and the vertical distance V between the vessel 9 and the sea bottom may be 50 m, for example, as indicated in Fig. 1.

The invention is not limited to the embodiment as shown in the drawings and described hereinbefore, which may be varied in different manners within the scope of the claims.

## Claims

1. A system (1) for underwater sound measurement, comprising a hydrophone (8) which is located within an open cage (2) having at least one face for resting on a sea bottom (S), **characterized in that** the cage (2) comprises a frame (5) having a shape of a regular polyhedron and the hydrophone (8) is located at a geometrical centre of the frame (5).

2. A system (1) according to claim 1, wherein the polyhedron is a tetrahedron.

3. A system (1) according to claim 2, wherein the hydrophone (8) is mounted to a support (7) which is fixed to a corner of the frame (5) and protrudes in the cage (2).

4. A system (1) according to any one of the preceding claims, wherein the frame (5) is made of rigid bars having the same dimensions and cross-sectional shapes.

5. A system (1) according to claim 4, wherein the bars have circular cross-sections.

## Patentansprüche

1. System (1) zur Unterwasserschallmessung, das ein Hydrophon (8) aufweist, das in einem offenen Käfig (2) mit wenigstens einer Seite zum Aufliegen auf einem Meeresboden (S) angeordnet ist, **dadurch gekennzeichnet, dass** der Käfig (2) einen Rahmen mit einer Form eines regelmäßigen Polyeders aufweist und das Hydrophon (8) in einer geometrischen Mitte des Rahmens (5) angeordnet ist.

2. System (1) nach Anspruch 1, wobei das Polyeder ein Tetraeder ist.

3. Anspruch (1) nach Anspruch 2, wobei das Hydrophon (8) auf einem Halter (7) montiert ist, der an einer Ecke des Rahmens (5) befestigt ist und in den Käfig (2) vorragt.

4. System (1) nach einem der vorhergehenden Ansprüche, wobei der Rahmen (5) aus starren Stangen mit den gleichen Abmessungen und Querschnittformen hergestellt ist.

5. System (1) nach Anspruch 4, wobei die Stangen kreisförmige Querschnitte haben.

## Revendications

1. Système (1) de mesure acoustique sous-marin, comprenant un hydrophone (8) qui est situé à l'intérieur d'une cage ouverte (2) ayant au moins une face pour reposer sur un fond marin (S), **caractérisé en ce que** la cage (2) comprend une ossature (5) ayant une forme de polyèdre régulier et l'hydrophone (8) est situé à un centre géométrique de l'ossature (5).

2. Système (1) selon la revendication 1, dans lequel le polyèdre est un tétraèdre.

3. Système (1) selon la revendication 2, dans lequel l'hydrophone (8) est monté sur un support (7) qui est fixé à un coin de l'ossature (5) et fait saillie dans la cage (2).

4. Système (1) selon l'une quelconque des revendications précédentes, dans lequel l'ossature (5) est faite de barres rigides ayant les mêmes dimensions et formes de section transversale.

5. Système (1) selon la revendication 4, dans lequel les barres présentent des sections transversales circulaires.
